# EUROPEAN PATENT SPECIFICATION

(11) **EP 2 190 163 B1**
(45) Date of publication and mention of the grant of the patent: **02.10.2019**
(21) Application number: 07800847.1
(22) Date of filing: 03.09.2007
(51) Int. Cl.: H04L 29/06, H04W 28/06

(54) **A METHOD FOR REPAIRING THE WINDOW-BASED LEAST SIGNIFICANT BITS DECODING IN THE ROBUST HEADER COMPRESSION**
VERFAHREN ZUM REPARIEREN DER DECODIERUNG NIEDRIGSTWERTIGER BITS AUF FENSTERBASIS BEI DER ROBUSTEN HEADER-KOMPRIMIERUNG
PROCÉDÉ DE RÉPARATION D'UN DÉCODAGE DE BITS DE POIDS FAIBLE WINDOWS DANS UNE COMPRESSION D'ENTÊTE ROBUSTE

(43) Date of publication of application: 26.05.2010
(73) Proprietor: ZTE Corporation, Shenzhen, Guangdong 518057 (CN)
(72) Inventor: LI, Rui, Shenzhen Guangdong 518057 (CN); LIAO, Junfeng, Shenzhen Guangdong 518057 (CN); ZHOU, Zhixiong, Shenzhen Guangdong 518057 (CN); MU, Guoyan, Shenzhen Guangdong 518057 (CN)
(74) Representative: Aipex B.V.
(86) International application number: PCT/CN2007/002630
(87) International publication number: WO 2009/030062

(56) References cited:
- WO-A1-2007/008750
- CN-A- 1 507 286
- US-A1- 2002 097 722
- US-A1- 2006 120 352
- US-A1- 2006 187 846
- US-A1- 2007 025 387

## Description

### Technical Field

The present invention relates to the technical field of communication, and more particularly, to a repairing method applied in decompressing a compressed header in wireless communication.

### Background of the Invention

The 3^{rd} Generation Mobile Communication (3G for short) technology has become one of the communication technologies that attract the most attention in the world. As a new communication technology, the 3G supports not only traditional circuit switching but also packet switching. And in post-3G technologies, such as Beyond 3G (B3G) and Worldwide Interoperability for Microwave Access (WiMax), packet switching is prevailing, i.e., Internet Protocol (IP) technology is mainly supported.

For multimedia applications such as voice, the IP technology will bring about low cost. However, if voice is transmitted in a traditional IP format, voice packets are carried on the Real Time Protocol (RTP) and User Datagram Protocol (UDP), and RTP/UDP/IP messages have great header overhead as compared to voice data payload; for example, the overhead is in total 40 bytes in IP version 4 (IPv4) and 60 bytes in IP version 6 (IPv6), while the actual voice data payload is only more than ten bytes, so bandwidth utilization rate is only around 20%. This will cause a great waste of radio air interface resources, and since a large part of the operation cost for a communication operator comes from purchasing use rights of a radio frequency band, it will be very disadvantageous to the communication operator if the expensive radio frequency spectrum can not be used efficiently. Therefore, the Internet Engineering Task Force (IETF) introduces a Robust Header Compression (ROHC) technology to compress the RTP/UDP/IP header in order to improve transmission efficiency of network data. The ROHC, which is an IP-based universal compression technology, can be used in any of the 3G standards and can also be used in post-3G technologies such as B3G and WiMax. And the ROHC can be used not only in a base station and user terminal but also in a core network segment. Using the ROHC, a header of up to 40 bytes can be compressed to 1 byte, such that the actual bandwidth utilization rate is increased to more than 90%.

The basic principle of the ROHC protocol is to classify each header field in a message, based on the fact that some sections, such as an IP address, a port number of UDP, etc. are unchanged between adjacent packets during transmission of the entire stream, and other sections, such as a sequence number (SN) and a timestamp (TS) of a RTP header, change with a rule. The ROHC protocol divides the header of the message into a static section and a dynamic section, and both a compressor and a decompressor store a context for each data stream. The compressor sends a complete message at the first time and the decompressor decompresses the message to obtain static information and dynamic information, and afterwards, the static section in an original message will not be contained in the compressed message.

The fields that change at an air interface are mainly the sequence number (SN), the timestamp (TS) and an IP identifier (IP-ID) of the RTP header. For multimedia applications such as VoIP, the SN of an adjacent packet increases by 1, and the increment of the TS is also fixed because a sampling value of voice is fixed and an interval of packet transmission is fixed too. Assuming that the increment of the TS is TS-STRIDE, the TS of an adjacent packet increases fixedly by 1 unit of TS-STRIDE. If the IP-ID does not change in a selected randomly increasing manner, the IP-ID of an adjacent packet will also increase by 1. Thus, values of the TS and the IP-ID can be derived directly from the SN.

The ROHC mainly uses a Window-based Least Significant Bits (WLSB) algorithm to compress the SN, TS and IP-ID. The WLSB algorithm is used to compress those values that change very little, and its basic idea is to transmit the lowest k bits of an original field value in stead of the whole original field value, to store a reference value corresponding to the field in the contexts of the compressor and decompressor, and the original field value is restored by the decompressor based on the reference value, a shifting value negotiated in advance and the received *k* bits. The WLSB algorithm introduces a concept of interpretation interval to ensure correctness of the compression and decompression. The interpretation interval defines an interval of decoded values. The compressor selects, according to a certain criterion, the lowest *k* bits to be transmitted, and the decompressor searches in the interpretation interval for a value, of which the lowest *k* bits is the same as the received *k* bits, as the decoded value.

However, it can be seen from the above description that if the difference between the reference value of the decompressor and the reference value of the compressor is too big, it is highly possible that there is no or little overlapping between the interpretation interval of the compressor and the interpretation interval of the decompressor, and as a result, decoding of the *k* bits will certainly fail.

For example, the ROHC protocol is mainly based on Request For Comments (RFC) 3095. The RFC3095 uses the WLSB algorithm to determine an interpretation interval, the decompressor stores a reference value *Ref* of a previous successful decompression, a shifting value *p* and a number *m* of the currently received *k* bits, and the four values are used to restore the SN. The interpretation interval is defined by a lower limit *Low*=*Ref-p*, and an upper limit *High*=*Ref*+ (2^*k-*1) *-p*, where "^" represents exponential operation. The decompressor takes a value that is the same as the received *k* bits in the interpretation interval as the decoded value. However, the reference value *Ref_d* of the decompressor is the SN decompressed correctly previously, and it may lag behind a reference value *Ref_c* of the compressor, resulting in no intersection between the interpretation intervals of the decompressor and the compressor. A value decoded through the WLSB algorithm must be within the interpretation interval of the decompressor, otherwise the decoding is directly regarded as failed. Thus, the inconsistency between the contexts of the compressor and decompressor will result in the failure of the Circulation Redundancy Check (CRC) for the decoded value.

US 2007/0025387 A1 provides an apparatus and system for encoding out of order data packets in a network. At a source unit, an out-of-order parameter is selected as the maximum out of order range value of data packets to be encoded with a minimum header size. A shifting parameter is then calculated using the selected out-of-order parameter. For a new data packet received, having a predetermined header field value, an interpretation interval is further calculated as a function of the shifting parameter and a reference value of a header field within a previously transmitted data packet. An encoding and compression algorithm is then applied to the predetermined header field value using the calculated interpretation interval, and the compressed value is further transmitted to a destination unit.

US 2006/120352 A1 provides methods and system to enhance local repair in robust header compression (ROHC) decompressors which may improve network transmission efficiency and quality. One method uses lower layer information to enhance local repair at the decompressor. Another method uses a User Datagram Protocol (UDP) checksum to enhance local repair at the decompressor.

### Summary of the Invention

A technical problem to be solved by the present invention is to provide a repairing method for Window-based Least Significant Bits (WLSB) decoding in Robust Header Compression (ROHC) in order to repair a decompressed value after the decompression fails, thereby obtaining a correct decompressed value.

The features of the method according to the present invention are defined in the independent claim, and the preferable features according to the present invention are defined in the dependent claims.

A repairing method for Window-based Least Significant Bits (WLSB) decoding in Robust Header Compression (ROHC) is provided, comprising:
when a decompressor decodes a parameter field sent by a compressor of ROHC with the WLSB decoding algorithm unsuccessfully, shifting an interpretation interval for a certain length, and then re-decoding the received parameter field with the shifted interpretation interval according to the WLSB decoding algorithm.

Wherein, the parameter field is a sequence number (SN), or a timestamp (TS), or an Internet Protocol identifier (IP-ID) of a Real Time Protocol (RTP)/User Datagram Protocol (UDP)/Internet Protocol (IP) header in the ROHC protocol.

Moreover, the repairing method further comprises:
when the decompressor decodes the parameter field sent by the compressor of ROHC with the WLSB decoding algorithm unsuccessfully, shifting the interpretation interval for 2 ^ *k* forward, and then re-decoding the received parameter field according to the WLSB decoding algorithm; wherein "^" represents exponential operation.

Moreover, the repairing method further comprises:
when the decompressor decodes the parameter field sent by the compressor of ROHC with the WLSB decoding algorithm unsuccessfully, shifting the interpretation interval for 2 ^ *k* backward, and then re-decoding the received parameter field according to the WLSB decoding algorithm; wherein "^" represents exponential operation.

Wherein, shifting the interpretation interval for 2 ^ *k* units forward or backward is implemented by shifting a reference value for 2 ^ *k* units forward or backward, and wherein "^" represents exponential operation.

Moreover, the repairing method further comprises:
reporting, by the decompressor, the parameter field to a high layer and updating a context if the re-decoding after the repairing is successful; and
discarding, by the decompressor, a packet that is decoded unsuccessfully and instructing the compressor to make a state fall back if the re-decoding after the repairing is unsuccessful.

Wherein, the repairing method further divides into the following steps of:
(1) starting a repairing procedure if the decompressor determines that a Circulation Redundancy Check (CRC) fails after a decoding;
(2) shifting, by the decompressor, the reference value *Ref* for 2 ^ *k* units forward to obtain a new reference value *Ref1*=*Ref*+2 ^ *k*, recalculating an interpretation interval according to a Request For Comments (RFC) 3095 decoding procedure to obtain an interpretation interval shifted for 2 ^ *k* units forward, and then performing decoding based on the obtained interpretation interval;
(3) if the decoding fails, shifting, by the decompressor, the reference value *Ref* for 2 ^ *k* units backward to obtain a new reference value *Ref2*=*Ref*-2 ^ *k,* recalculating an interpretation interval according to the RFC3095 decoding procedure to obtain an interpretation interval shifted for 2 ^ *k* units backward, and then performing decoding based on the obtained interpretation interval; and
(4) determining whether the decoding after the repairing is correct, and handing in, by the decompressor, the parameter field to the high layer and updating the context if the CRC for the finally repaired result is successful; and discarding, by the decompressor, the packet that is decoded unsuccessfully and instructing the compressor to make the state fall back if the repairing is finally unsuccessful;
wherein "^" represents exponential operation.

Wherein, the decoding is performed based on the reference value *Ref* of a previous successful decompression, a shifting value *p* and a number *m* of currently received *k* bits, which are stored in the decompressor, and the interpretation interval determined according to the WLSB algorithm.

Wherein, the interpretation interval has a lower limit *Low*=*Ref-p* and an upper limit *High*=*Ref*+ (2*^k*-1) -*p*, and wherein "^" represents exponential operation.

The repairing method in accordance with the present invention can prevent useful information from being discarded directly, and by the repairing, can avoid direct feedback of a negative message which will lead to fallback of the compression state, and moreover, improves the fault tolerance capability of the system, which is of great significance for the system operating in an environment with long delay and high bit error rate. In addition, the algorithm provided by the present invention also applies to the repairing of the timestamp (TS) field and IP identifier (IP-ID) field in the RTP/UDP/IP header in the ROHC protocol after the decompression fails.

### Brief Description of the Drawings

FIG. 1 is a flow chart of a method for repairing a decoded SN after CRC fails in; and
FIG. 2 is a schematic diagram of a repaired interval, the size of which is 3 times that of an interpretation interval, obtained using a repairing method.

### Preferred Embodiments of the Invention

The present invention will be described in greater detail below in conjunction with the accompanying drawings.

According to the background of the related art, if the difference between a reference value of a decompressor and a reference value of a compressor is too big, it is highly possible that there is no or little overlapping between an interpretation interval of the compressor and an interpretation interval of the decompressor, and as a result, decoding of the *k* bits will certainly fail. The present invention attempts to shift the interpretation interval of the decompressor after the decompression fails, so that the interpretation interval of the decompressor can be consistent with the interpretation interval of the compressor, thereby restoring a value of the SN, TS or IP-ID. The core of the present invention consists in that the decompressor shifts the interpretation interval to attempt to repair a parameter value, such as a value of the SN, TS or IP-ID, after the decoding fails.

For example, the ROHC protocol is mainly based on Request For Comments (RFC) 3095. The RFC3095 uses the WLSB algorithm to determine an interpretation interval, the decompressor stores a reference value *Ref* of a previous successful decompression, a shifting value *p* and a number *m* of the currently received *k* bits, and the four values are used to restore the SN. The interpretation interval is defined by a lower limit *Low*=*Ref-p*, and an upper limit *High*=*Ref*+ *(*2^*k*-1*) -p*, where "^" represents exponential operation. The decompressor takes a value that is the same as the received k bits in the interpretation interval as a decoded value. However, the reference value *Ref_d* of the decompressor is the SN decompressed correctly previously, and it may lag behind a reference value *Ref_c* of the compressor, resulting in no intersection between the interpretation intervals of the decompressor and compressor. A value decoded through the WLSB algorithm must be within the interpretation interval of the decompressor, otherwise the decoding is directly regarded as failed. Thus, the inconsistency between the contexts of the compressor and decompressor will result in the failure of the Circulation Redundancy Check (CRC) for the decoded value.

According to an example, when the decompression fails, the interpretation interval of the decompression is shifted for a certain interval. It is noted that *High*=*Low*+ (2 ^ *k-*1), and the difference between the lower limit and the upper limit of the interpretation interval is 2 ^ *k.* In order to avoid intersection between the shifted interpretation intervals, the interpretation interval is shifted for a distance of 2 ^ *k* to the left or right and then a new decoded value is calculated. For example, the reference value *Ref_d* for decompression is shifted for 2 ^ *k* forward or backward such that the repaired interpretation interval of the decompressor is adjacent to the original interpretation interval and the difference between them is just one interpretation interval. As a result, the repaired interval is maximized, such that an actual interpretation interval defined according to the repairing algorithm can cover a widest range, thereby ensuring the robustness of the system.

According to the prior art, the received information is discarded directly when the decoding fails, which will cause a waste of resources and lower efficiency. In contrast, the method in accordance with the present invention can prevent useful information from being discarded directly, and attempt to repair it to obtain a valid decoded value, thus avoiding direct feedback of a negative message which will lead to fallback of the compression state; in addition, the method improves the fault tolerance capability of the system, which is of great significance for the system operating in an environment with long delay and high bit error rate.

Furthermore, the repairing method in accordance with the present invention also applies to repairing of the timestamp (TS) field and IP identifier (IP-ID) field in the RTP/UDP/IP header in the ROHC protocol when the decompression fails.

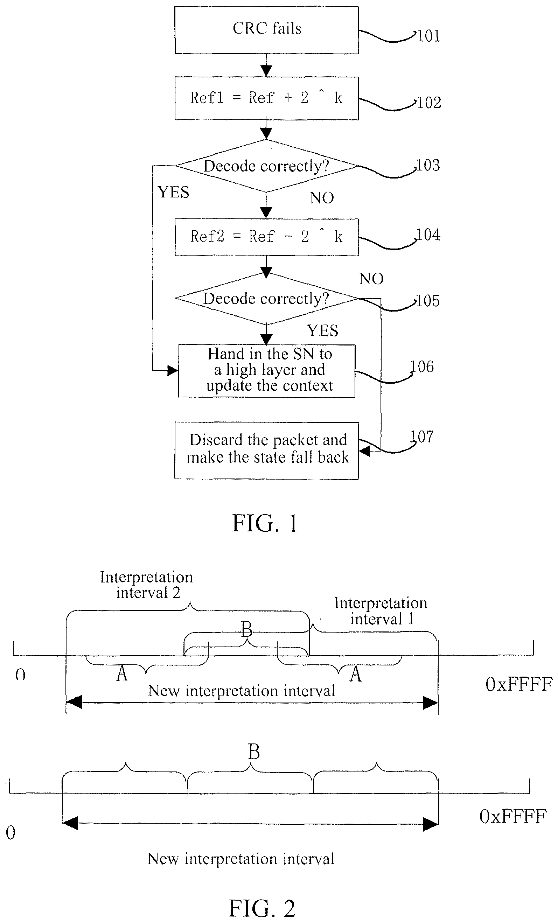

An example of repairing a SN after failure of decompression in accordance with the present invention is illustrated in FIG. 1. And as shown in FIG. 1, specific steps of the repairing method are as follows:
Step 101: the repairing method is used when a decoded value falls within an interpretation interval and CRC fails.
Step 102: when a reference value *Ref_d* of a decompressor lags behind a reference value *Ref_c* of a compressor for a certain distance, there is no or only a small intersection between an interpretation interval of the decompressor and an interpretation interval of the compressor, an in this situation, a decoded value of the decompressor is highly likely to be incorrect, thus the decompressor attempts to shift the interpretation interval of the decompression to repair it. In the step 102, the reference vale *Ref* is shifted for 2 ^ *k* units forward to obtain a new reference value *Ref1*=*Ref*+2 ^ *k*, and according to the definition of the interpretation interval, the interpretation interval is also shifted for 2 ^ *k* units forward.
Step 103: after the interpretation interval is shifted, a new interpretation interval is established according to the RFC3095 decoding procedure for decoding.
Step 104: if the decoding still fails after the shifting for 2 ^ *k* units forward, then the decompressor attempts to shift the reference value for 2 ^ *k* units backward for decoding, and obtains a new reference value *Ref2*=*Ref-*2 ^ *k.* According to the definition of the interpretation interval, the interpretation interval is also shifted for 2 ^ *k* units backward. After the shifting for 2 ^ *k* units backward, the interpretation interval is established according to the RFC3095 decoding procedure for decoding.

Therefore, with this repairing method, the length of the interpretation interval of the decompressor will virtually be 3 times that of the original interpretation interval, the range covered is much larger than the length of an interpretation interval defined in the RFC 3095, and the decoded values that can be selected by the decompressor during decoding are 3 times as many as those before the repairing.

Step 105: determine whether the decoding is correct after the repairing.

Step 106: the decompressor hands in the SN to a high layer and updates the context if the CRC for the finally repaired result is successful.

Step 107: the decompressor discards the packet that is decoded unsuccessfully and instructs the compressor to make the state fall back if the repairing is unsuccessful.

A new interpretation interval obtained using the repairing algorithm is illustrated in FIG. 2. As shown in FIG. 2, interpretation intervals before and after the use of the repairing method in accordance with the present invention is illustrated; before the repairing, there is just partial overlapping between the interpretation intervals of the compressor and decompressor, which will result in failure of the decoding; while with the repairing method applied, the size of the repaired interval is 3 times that of the interpretation interval. In FIG. 2, the interval A represents the interpretation interval of the compressor, the interval B represents the interpretation interval of the decompressor before repairing, the interpretation interval 1 is a interpretation interval obtained by shifting the interval B for 2 ^ *k* units backward, the interpretation interval 2 is a interpretation interval obtained by shifting the interval B for 2 ^ *k* units forward, and the new interpretation interval, which is 3 times as large as the interval B, is obtained by shifting the interval B for 2 ^ *k* units forward and backward respectively. After such shifting, decoding with the new interpretation interval can certainly acquire a correct decoded value, thereby achieving the destination of repairing.

Using a method similar to that for repairing the decoding of the SN illustrated in FIG. 1, repairing of the timestamp (TS) field and the IP identifier (IP-ID) field when the decompression fails may also be implemented.

The size of the interpretation interval defined in the ROHC protocol is taken into consideration. If a preceding value that is decoded correctly is used directly as the repaired value, then there is a large overlapping section between its interpretation interval and an interpretation interval obtained by using the preceding value as a reference value, and the actual repaired interval is not a great extension of the original interpretation interval. In contrast, according to the present invention, the interpretation interval is shifted for 2 ^ *k* forward and backward respectively, and the distance of each shifting is equal to the length of one interpretation interval, such that the repaired interval is 3 times as large as the interpretation interval, thereby greatly enhancing the repairing capability of the system.

### Industrial Applicability

The present invention applies to the technical field of communication, especially to the 3G and more advanced post-3G communication technologies, such as B3G and WiMax. In particular, in technical standards introducing the robust header compression (ROHC) technology, the present invention can be applied not only in a base station and user terminal but also in a core network segment. Using the repairing method in accordance with the present invention, a sequence number (SN) field, timestamp (TS) field and IP identifier (IP-ID) field may be repaired by a decompressor, through extending the interpretation interval of the decompressor, after the decompression fails.

## Claims

1. A repairing method for Window-based Least Significant Bits "WLSB" decoding in Robust Header Compression "ROHC", comprising: under the only condition that a decompressor decodes a parameter field sent by a compressor of ROHC with the WLSB decoding algorithm unsuccessfully, shifting an interpretation interval for 2 ^ *k* forward or shifting the interpretation interval for 2 ^ *k* backward, and then re-decoding the received parameter field with the shifted interpretation interval according to the WLSB decoding algorithm, wherein "^" represents exponential operation, *k* is a number of bits received as a compressed field value of a packet header transmitted by a compressor.

2. The repairing method according to claim 1, wherein the parameter field is a sequence number "SN", or a timestamp "TS", or an Internet Protocol identifier "IP-ID" of a Real Time Protocol "RTP"/User Datagram Protocol "UDP"/Internet Protocol "IP" header in the ROHC protocol.

3. The repairing method according to claim 1, wherein shifting the interpretation interval for 2 ^ *k* forward or backward is implemented by shifting a reference value for 2 ^ *k* forward or backward, and wherein "^" represents exponential operation.

4. The repairing method according to claim 3, further comprising:
reporting, by the decompressor, the parameter field to a high layer and updating a context if the re-decoding after the repairing is successful; and
discarding, by the decompressor, a packet that is decoded unsuccessfully and instructing the compressor to make a state fall back if the re-decoding after the repairing is unsuccessful.

5. The repairing method according to claim 4, wherein the repairing method further divides into the following steps of:
a. starting a repairing procedure if the decompressor determines that a Circulation Redundancy Check "CRC" fails after a decoding (101);
b. shifting, by the decompressor, the reference value, *Ref,* for 2 ^ *k* forward to obtain a new reference value *Ref1*=*Ref*+2 ^ *k*, recalculating an interpretation interval according to a Request For Comments "RFC" 3095 decoding procedure to obtain an interpretation interval shifted for 2 ^ *k* forward (102), and then performing decoding based on the obtained interpretation interval;
c. if the decoding fails (103), shifting, by the decompressor, the reference value, *Ref,* for 2 ^ *k* backward to obtain a new reference value *Ref2*=*Ref-*2 ^ *k*, recalculating an interpretation interval according to the RFC3095 decoding procedure to obtain an interpretation interval shifted for 2 ^ *k* backward (104), and then performing decoding based on the obtained interpretation interval; and
d. determining whether the decoding in step c is correct (105), and handing in, by the decompressor, the parameter field to the high layer and updating the context if the CRC for the finally repaired result is successful (106); and discarding, by the decompressor, the packet that is decoded unsuccessfully and instructing the compressor to make the state fall back if the repairing is finally unsuccessful (107);
wherein "^" represents exponential operation.

6. The repairing method according to claim 5, wherein the decoding is performed based on the reference value, *Ref,* of a previous successful decompression, a shifting value, *p,* and a number, *m,* of currently received *k* bits, which are stored in the decompressor, and the interpretation interval determined according to the WLSB algorithm.

7. The repairing method according to claim 6, wherein the interpretation interval has a lower limit, *Low,*=*Ref-p* and an upper limit, *High,* =*Ref*+ (2^*k-*1) -*p*, and wherein "^" represents exponential operation.

## Patentansprüche

1. Verfahren zum Reparieren der Decodierung niedrigstwertiger Bits auf Fensterbasis (WLSB) bei der robusten Header-Komprimierung (ROHC), das Folgendes umfasst:
unter der einzigen Bedingung, dass ein Dekomprimierer ein Parameterfeld, das von einem Komprimierer der ROHC mit dem WLSB-Decodierungsalgorithmus gesendet wurde, erfolglos decodiert, Verschieben eines Interpretationsintervalls um 2^*k* vorwärts oder Verschieben des Interpretationsintervalls um 2^*k* rückwärts und danach erneutes Codieren des empfangenen Parameterfelds mit dem verschobenen Interpretationsintervall gemäß dem WLSB-Decodierungsalgorithmus, wobei "^" eine exponentielle Operation repräsentiert und *k* eine Anzahl von Bits ist, die als ein komprimierter Feldwert eines Paketheaders empfangen wird, der durch einen Komprimierer übertragen wird.

2. Verfahren zum Reparieren nach Anspruch 1, wobei das Parameterfeld eine Sequenzanzahl (SN) oder ein Zeitstempel (TS) oder eine Internetprotokollkennung (IP-ID) eines Real-Time-Protocol(RTP)-/User-Datagram-Protocol (UDP)-/Internet-Protocol(IP)-Headers in dem ROHC-Protokoll ist.

3. Verfahren zum Reparieren nach Anspruch 1, wobei das Verschieben des Interpretationsintervalls um 2^*k* vorwärts oder rückwärts durch ein Verschieben eines Referenzwerts um 2^*k* vorwärts oder rückwärts implementiert wird und wobei "^" eine exponentielle Operation repräsentiert.

4. Verfahren zum Reparieren nach Anspruch 3, ferner umfassend:
Melden durch den Dekomprimierer des Parameterfelds an eine Hochschicht und Aktualisieren eines Kontexts, falls das erneute Codieren nach dem Reparieren erfolgreich ist; und
Verwerfen durch den Dekomprimierer eines Pakets, das erfolglos decodiert wird, und Anweisen des Komprimierers, einen Zustand zurückfallenzulassen, falls das erneute Codieren nach dem Reparieren erfolglos ist.

5. Verfahren zum Reparieren nach Anspruch 4, wobei das Verfahren zum Reparieren sich ferner in die folgenden Schritte aufteilt:
a. Beginnen eines Reparaturprozesses, falls der Dekomprimierer bestimmt, dass eine zyklische Redundanzprüfung (CRC) nach einem Decodieren (101) fehlschlägt;
b. Verschieben durch den Dekomprimierer des Referenzwerts (*Ref*) um 2^*k* vorwärts, um einen neuen Referenzwert (*Ref*1 = *Ref* + 2^*k*) zu erhalten, erneutes Berechnen eines Interpretationsintervalls gemäß einem Request-For-Comments(RFC)-3095-Prozess, um ein Interpretationsintervall zu erhalten, das um 2^*k* vorwärts (102) verschoben ist, und danach Durchführen eines Decodierens auf der Basis des erhaltenen Interpretationsintervalls;
c. falls das Decodieren fehlschlägt (103), Verschieben durch den Dekomprimierer des Referenzwerts (*Ref*) um 2^*k* rückwärts, um einen neuen Referenzwert (*Ref2* = *Ref* - 2^*k*) zu erhalten, erneutes Berechnen eines Interpretationsintervalls gemäß dem RFC3095-Decodierungsprozess, um ein Interpretationsintervall zu erhalten, das um 2^*k* rückwärts (104) verschoben ist, und danach Durchführen des Decodierens auf der Basis des erhaltenen Interpretationsintervalls; und
d. Bestimmen, ob das Decodieren in Schritt c korrekt (105) ist, und Einreichen durch den Dekomprimierer des Parameterfelds an die Hochschicht und Aktualisieren des Kontexts, falls die CRC nach dem letztendlich reparierten Ergebnis erfolgreich (106) ist; und Verwerfen durch den Dekomprimierer des Pakets, das erfolglos decodiert wird, und Anweisen des Komprimierers, den Zustand zurückfallenzulassen, falls das Reparieren letztendlich erfolglos (107) ist;
wobei "^" eine exponentielle Operation repräsentiert.

6. Verfahren zum Reparieren nach Anspruch 5, wobei das Decodieren auf der Basis des Referenzwerts (*Ref*) einer vorhergehenden erfolglosen Dekomprimierung, einem Verschiebungswert (*p*) und einer Anzahl (*m*) von momentan empfangenen (*k*) Bits durchgeführt wird, und wobei das Interpretationsintervall gemäß dem WLSB-Algorithmus bestimmt wird.

7. Verfahren zum Reparieren nach Anspruch 6, wobei das Interpretationsintervall eine untere Grenze (*Tief,* = *Ref - p*) und eine obere Grenze (*Hoch,* = *Ref* + (2^*k* - 1) *-p*) aufweist, und wobei "^" eine exponentielle Operation repräsentiert.

## Revendications

1. Procédé de réparation d'un décodage de bits de poids faible Windows « WLSB » dans une compression d'entête robuste « ROHC », comprenant :
à la seule condition que
un décompresseur décode un champ de paramètre envoyé par un compresseur de ROHC avec l'algorithme de décodage WLSB sans succès, en décalant un intervalle d'interprétation de 2 ^ k en avant ou en décalant l'intervalle d'interprétation de 2 ^ *k* en arrière, puis en redécodant le champ de paramètre reçu avec l'intervalle d'interprétation décalé selon l'algorithme de décodage WLSB, dans lequel « ^ » représente une opération exponentielle, *k* est un nombre de bits reçus en tant que valeur de champ compressé d'un entête de paquet transmis par un compresseur.

2. Procédé de réparation selon la revendication 1, dans lequel le champ de paramètre est un numéro de séquence « SN », ou une estampille temporelle « TS » ou un identifiant de protocole Internet « IP-ID » d'un en-tête de protocole en temps réel « RTP »/protocole de datagramme utilisateur « UDP »/protocole Internet « IP » dans le protocole ROHC.

3. Procédé de réparation selon la revendication 1, dans lequel le décalage de l'intervalle d'interprétation de 2 ^ *k* en avant ou en arrière est mis en oeuvre en décalant une valeur de référence de 2 ^ *k* en avant ou en arrière, et dans lequel « ^ » représente une opération exponentielle.

4. Procédé de réparation selon la revendication 3, comprenant en outre :
le signalement, par le décompresseur, du champ de paramètre à un couche supérieure et la mise à jour d'un contexte si le redécodage après la réparation est réussi ; et
le rejet, par le décompresseur, d'un paquet qui est décodé sans succès et le fait de donner l'instruction au compresseur de mettre en place un état de secours si le redécodage après la réparation échoue.

5. Procédé de réparation selon la revendication 4, dans lequel le procédé de réparation comprend en outre les étapes suivantes :
a. le démarrage d'une procédure de réparation si le décompresseur détermine qu'une vérification de redondance de circulation « CRC » échoue après un décodage (101) ;
b. le décalage, par le décompresseur, de la valeur de référence, *Ref,* de 2 ^ *k* en avant pour obtenir une nouvelle valeur de référence *Ref1*=*Ref*+2 ^ *k,* le recalcul d'un intervalle d'interprétation selon une procédure de décodage Demande de commentaires « RFC » 3095 pour obtenir un intervalle d'interprétation décalé de 2 ^ *k* en avant (102), puis l'exécution du décodage sur la base de l'intervalle d'interprétation obtenu ;
c. si le décodage échoue (103), le décalage, par le décompresseur, de la valeur de référence, *Ref,* de 2 ^ *k* en arrière pour obtenir une nouvelle valeur de référence *Ref2*=*Ref-*2 ^ *k*, le recalcul d'un intervalle d'interprétation selon la procédure de décodage RFC3095 pour obtenir un intervalle d'interprétation décalé de 2 ^ *k* en arrière (104), puis l'exécution du décodage sur la base de l'intervalle d'interprétation obtenu ; et
d. le fait de déterminer si le décodage à l'étape c est correct (105), et la restitution, par le décompresseur, du champ de paramètre à la couche supérieure et la mise à jour du contexte si le CRC du résultat finalement réparé est réussi (106) ; et le rejet, par le décompresseur, du paquet décodé sans succès et le fait de donner l'instruction au compresseur de mettre en place l'état de secours si la réparation échoue finalement (107) ;
dans lequel « ^ » représente une opération exponentielle.

6. Procédé de réparation selon la revendication 5, dans lequel le décodage est effectué sur la base de la valeur de référence, *Ref,* d'une décompression réussie précédente, d'une valeur de décalage, *p*, et d'un nombre, *m*, de *k* bits actuellement reçus, qui sont stockés dans le décompresseur, et l'intervalle d'interprétation déterminé selon l'algorithme WLSB.

7. Procédé de réparation selon la revendication 6, dans lequel l'intervalle d'interprétation a une limite inférieure, *Low,*=*Ref-p* et une limite supérieure, *High,*=*Ref*+ (2^*k*-1)-*p*, et dans lequel « ^ » représente une opération exponentielle.
